(19) Europäisches Patentamt
European Patent Office
Office européen des brevets

(11) EP 0 900 019 B1

(12) **EUROPÄISCHE PATENTSCHRIFT**

(45) Veröffentlichungstag und Bekanntmachung des Hinweises auf die Patenterteilung:
**29.08.2001 Patentblatt 2001/35**

(21) Anmeldenummer: **97921700.7**

(22) Anmeldetag: **23.04.1997**

(51) Int Cl.7: **A01N 47/24**
// (A01N47/24, 47:34, 47:14)

(86) Internationale Anmeldenummer:
**PCT/EP97/02041**

(87) Internationale Veröffentlichungsnummer:
**WO 97/40686 (06.11.1997 Gazette 1997/47)**

(54) **FUNGIZIDE MISCHUNGEN**

FUNGICIDE MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **26.04.1996 DE 19616716**
**30.04.1996 DE 19617234**
**30.04.1996 DE 19617231**

(43) Veröffentlichungstag der Anmeldung:
**10.03.1999 Patentblatt 1999/10**

(73) Patentinhaber: **BASF AKTIENGESELLSCHAFT**
**67056 Ludwigshafen (DE)**

(72) Erfinder:
- **MÜLLER, Bernd**
  **D-67227 Frankenthal (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SCHERER, Maria**
  **D-76829 Landau (DE)**
- **SCHELBERGER, Klaus**
  **D-67161 Gönnheim (DE)**
- **LEYENDECKER, Joachim**
  **D-68526 Ladenburg (DE)**

(56) Entgegenhaltungen:
**EP-A- 0 645 089**
**EP-A- 0 645 090**
**WO-A-96/01256**
**WO-A-96/01258**
**DE-A- 4 420 277**
**DE-A- 4 420 279**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 900 019 B1

## Beschreibung

Die vorliegende Erfindung betrifft eine fungizide Mischung, welche

a) ein Carbamat der Formel I,

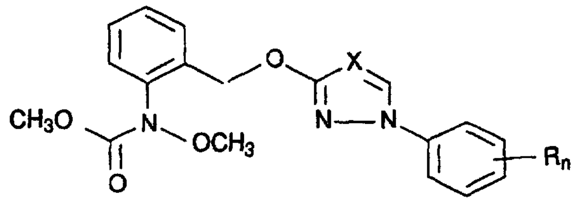

I

in der X für CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId), und/oder

c) 1-(2-Cyano-2-methoxyiminoacetyl)-3-ethylharnstoff (III)

$$H_3CCH_2\text{-NHCONH-CO-C(CN)=NOCH}_3 \qquad \text{III}$$

in einer synergistisch wirksamen Menge enthält.

Außerdem betrifft die Erfindung Verfahren zur Bekämpfung von Schadpilzen mit Mischungen der Verbindungen I, II und/oder III und die Verwendung der Verbindungen I, II und/oder III zur Herstellung derartiger Mischungen.

Die Verbindungen der Formel I, ihre Herstellung und ihre Wirkung gegen Schadpilze ist aus der Literatur bekannt (WO-A 96/01,256 und WO-A 96/01,258).

Ebenfalls bekannt sind die Dithiocarbamate II (IIa: common name: Mancozeb, US-A 3,379,610; IIb: common name: Maneb, US-A 2,504,404; IIc: ehem. common name: Metiram, US-A 3,248,400; IId: common name: Zineb, US-A 2,457,674), deren Herstellung und deren Wirkung gegen Schadpilze.

Ebenfalls bekannt ist die Verbindung III (US-A 3,957,847; common name: Cymoxanil), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I, II und/oder III oder bei Anwendung der Verbindungen I, II und/oder III nacheinander Schadpilze besser bekämpfen lassen als mit den Einzelverbindungen.

Zu diesem Zweck eignen sich Mischungen aus I und II oder I und III aber auch Mischungen, die I, II und III enthalten.

Die Formel I repräsentiert insbesondere Carbamate, in denen die Kombination der Substituenten einer Zeile der folgenden Tabelle entspricht:

| Nr. | X | $R_n$ |
|---|---|---|
| I.1 | N | 2-F |
| I.2 | N | 3-F |
| I.3 | N | 4-F |

(fortgesetzt)

| Nr. | X | $R_n$ |
|---|---|---|
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | $2-CH_3$ |
| I.11 | N | $3-CH_3$ |
| I.12 | N | $4-CH_3$ |
| I.13 | N | $2-CH_2CH_3$ |
| I.14 | N | $3-CH_2CH_3$ |
| I.15 | N | $4-CH_2CH_3$ |
| I.16 | N | $2-CH(CH_3)_2$ |
| I.17 | N | $3-CH(CH_3)_2$ |
| I.18 | N | $4-CH(CH_3)_2$ |
| I.19 | N | $2-CF_3$ |
| I.20 | N | $3-CF_3$ |
| I.21 | N | $4-CF_3$ |
| I.22 | N | $2,4-F_2$ |
| I.23 | N | $2,4-Cl_2$ |
| I.24 | N | $3,4-Cl_2$ |
| I.25 | N | $2-Cl, 4-CH_3$ |
| I.26 | N | $3-Cl, 4-CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | $2-CH_3$ |
| I.37 | CH | $3-CH_3$ |
| I.38 | CH | $4-CH_3$ |
| I.39 | CH | $2-CH_2CH_3$ |
| I.40 | CH | $3-CH_2CH_3$ |
| I.41 | CH | $4-CH_2CH_3$ |

(fortgesetzt)

| Nr. | X | $R_n$ |
|---|---|---|
| I.42 | CH | 2-$CH(CH_3)_2$ |
| I.43 | CH | 3-$CH(CH_3)_2$ |
| I.44 | CH | 4-$CH(CH_3)_2$ |
| I.45 | CH | 2-$CF_3$ |
| I.46 | CH | 3-$CF_3$ |
| I.47 | CH | 4-$CF_3$ |
| I.48 | CH | 2,4-$F_2$ |
| I.49 | CH | 2,4-$Cl_2$ |
| I.50 | CH | 3,4-$Cl_2$ |
| I.51 | CH | 2-Cl, 4-$CH_3$ |
| I.52 | CH | 3-Cl, 4-$CH_3$ |

Besonders bevorzugt werden die Verbindungen I.12, I.23, I.32 und I.38.

Die Verbindungen I und III sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II und/oder III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I, II und/oder III bzw. die gleichzeitige gemeinsame oder getrennte Verwendung der Verbindungen I, II und/oder III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I, II und/oder III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 200:1 bis 0,1:1, vorzugsweise 100:1 bis 1:1, insbesondere 50:1 bis 5:1 (11:1) angewendet.

Die Verbindungen I und III werden üblicherweise in einem Gewichtsverhältnis von 10:1 bis 0,1:1, vorzugsweise 5:1 bis 0,2:1, insbesondere 3:1 bis 1:3 (III:I) angewendet.

Die Aufwandmengen der erfindungsgemäßen Mischungen liegen je nach Art des gewünschten Effekts für die Verbindungen I im allgemeinen bei 0,005 bis 0,5 kg/ha, vorzugsweise 0,01 bis 0,5 kg/ha, insbesondere 0,01 bis 0,3 kg/ha.

Die Aufwandmengen für die Verbindungen II liegen im allgemeinen bei 0,1 bis 10 kg/ha, vorzugsweise 0,5 bis 5 kg/ha, insbesondere 1 bis 4 kg/ha.

Die Aufwandmengen für die Verbindungen III liegen in der Regel bei 0,005 bis 0,8 kg/ha, vorzugsweise 0,01 bis 0,5 kg/ha, insbesondere 0,05 bis 0,3 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und II oder III oder der Mischungen aus den Verbindungen I, II und/oder III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und/oder III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Staubemittel können durch Mischen oder gemeinsames Vermahlen der Verbindungen I, II und/oder III oder der Mischung aus den Verbindungen I, II und/oder III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II oder III bzw. der Mischung aus den Verbindungen I, II und/oder III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I, II oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z / 100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (**W**) wurde nach der Formel von Abbot wie folgt berechnet:

$$W = (1 - \alpha) \cdot 100 / \beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1-6 - kurative Wirksamkeit gegen Plasmopara viticola

Blätter von Topfreben der Sorte "Müller-Thurgau" wurden mit einer wäßrigen Zoosporenaufschwemmung von Plasmopara viticola inokuliert. Anschließend wurden die Reben für 48 Stunden in eine wasserdampfgesättigten Kammer bei 22 - 24°C gestellt. Dann wurden sie aus den Kammern herausgenommen und nach dem Abtrocknen mit wäßriger Wirkstoffaufbereitung, die mit einer Stammlösung aus 10 % Wirkstoff, 63 % Cyclohexanon und 27 % Emulgiermittel angesetzt wurde, bis zur Tropfnäße besprüht. Nach dem Antrocknen des Spritzbelages wurden die Pflanzen für 5 Tage im Gewächshaus bei Temperturen zwischen 20 und 30°C weiter kultiviert. Nach dieser Zeit wurden die Pflanzen zur Beschleunigung des Sporangienträgerausbruchs abermals für 16 Stunden in eine feuchte Klimakammer gestellt. Dann wurde das Ausmaß der Befallsentwicklung auf den Blattunterseiten visuell ermittelt.

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (98 % Befall) | 0 |
| 2V | Verbindung Nr. 1.32 = A | 12,5 | 75 |
| 3V | Verbindung Nr. 1.38 = B | 12,5 | 70 |
| 4V | III=Cymoxanil | 12,5 | 60 |

| Bsp. | Wirkstoffkonzentration in der Spritzbrühe in ppm | beobachteter Wirkungsgrad | berechneter Wirkungsgrad*) |
|---|---|---|---|
| 5 | 12,5 A + 12,5 III | 100 | 90 |
| 6 | 12,5 B + 12,5 III | 100 | 88 |

*) berechnet nach der Colby-Formel

Aus den Ergebnissen der Beispiele geht hervor, daß der beobachtete Wirkungsgrad in allen Mischungsverhältnissen höher ist, als der nach der Colby-Formel vorausberechnete Wirkungsgrad.

Beispiele 7-19 - Wirksamkeit gegen Plasmopara viticola

Blätter von Topfreben der Sorte "Müller-Thurgau" wurden mit wäßriger Wirkstoffaufbereitung, die mit einer Stammlösung aus 10 % Wirkstoff, 63 % Cyclohexanon und 27 % Emulgiermittel angesetzt wurde, bis zur Tropfnäße besprüht. Um die Dauerwirkung der Substanzen beurteilen zu können, wurden die Pflanzen nach dem Antrocknen des Spritzbelages für 7 Tage im Gewächshaus aufgestellt. Erst dann wurden die Blätter mit einer wäßrigen Zoosporenaufschweamung von Plasmopara viticola inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. "Calculating synergistic and antagonistic responses of herbicide Combinations", Weeds, 15, S. 20-22, 1967) ermittelt und mit den beobachteten Wirkungsgraden verglichen.

| Bsp. | Wirkstoff | Wirkstoffkonzentrat in der Spritzbrühe in ppm | Wirkungsgrad in % der unbehandelten Kontrolle |
|---|---|---|---|
| 7V | Kontrolle (unbehandelt) | (90 % Befall) | 0 |
| 8V | Verbindung<br>Nr. 1.32 = A | 0.63<br>0.31 | 90<br>60 |
| 9V | Verbindung<br>Nr. 1.38 = B | 0.63<br>0.31 | 90<br>80 |
| 10V | IIb = Maneb | 6.3<br>3.1 | 0<br>0 |
| 11V | IIc = Metiram | 6.3<br>3.1 | 0<br>0 |
| Bsp. | Wirkstoffkonzentrat in der Spritzbrühe in ppm | beobachteter Wirkungsgrad | berechneter Wirkungsgrad*) |
| 12 | 0,63 A + 6,3 IIb | 98 | 90 |
| 13 | 0,31 A + 3,1 IIb | 93 | 60 |
| 14 | 0,63 A + 6,3 IIc | 100 | 90 |
| 15 | 0,31 A + 3,1 IIc | 75 | 60 |
| 16 | 0,63 B + 6,3 IIb | 98 | 90 |
| 17 | 0,31 B + 3,1 IIb | 97 | 80 |
| 18 | 0,63 B + 6,3 IIc | 98 | 90 |
| 19 | 0,31 B + 3,1 IIc | 95 | 80 |

*) berechnet nach der Colby-Formel

Aus den Ergebnissen der Versuche geht hervor, daß der beobachtete Wirkungsgrad in allen Mischungsverhältnissen höher ist, als der nach der Colby-Formel vorausberechnete Wirkungsgrad.

## Patentansprüche

1. Fungizide Mischung, enthaltend

   a) ein Carbamat der Formel I,

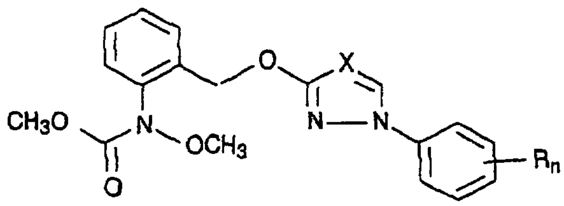

I

   in der X für CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, und

   b) ein Dithiocarbamat (II) ausgewählt aus der Gruppe

   - Mangan-ethylenbis(dithiocarbamat) (Zinkkomplex) (IIa),
   - Mangan-ethylenbis(dithiocarbamat) (IIb),
   - Zinkammoniat-ethylenbis(dithiocarbamat) (IIc) und
   - Zink-ethylenbis(dithiocarbamat) (IId), und/oder

   c) 1-(2-Cyano-2-methoxyiminoacetyl)-3-ethylharnstoff (III)

$$H_3CCH_2\text{-NHCONH-CO-C(CN)=NOCH}_3 \quad \text{III}$$

   in einer synergistisch wirksamen Menge.

2. Fungizide Mischung nach Anspruch 1, enthaltend Mangan-ethylenbis(dithiocarbamat) (Zinkkomplex) (IIa).

3. Fungizide Mischung nach Anspruch 1, enthaltend Mangan-ethylenbis(dithiocarbamat) (IIb).

4. Fungizide Mischung nach Anspruch 1, enthaltend Zinkammoniatethylenbis(dithiocarbamat) (IIc).

5. Fungizide Mischung nach Anspruch 1, enthaltend Zinkethylenbis (dithiocarbamat) (IId) .

6. Fungizide Mischung nach Anspruch 1, **dadurch gekennzeichnet**, daß das Gewichtsverhältnis der Verbindung II zu der Verbindung I 200:1 bis 0,1:1 beträgt.

7. Verfahren zur Bekämpfung von Schadpilzen, **dadurch gekennzeichnet**, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und der Verbindung der Formel II und/oder III gemäß Anspruch 1 behandelt.

## Claims

1. A fungicidal mixture comprising

   a) a carbamate of the formula I

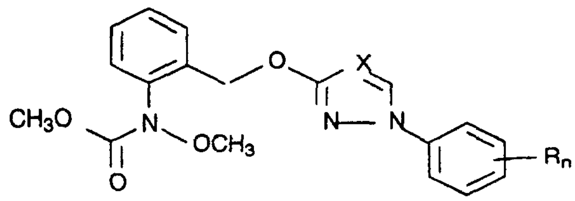

I

where X is CH or N, n is 0, 1 or 2 and R is halogen, $C_1$-$C_4$-alkyl or $C_1$-$C_4$-haloalkyl, it being possible for the radicals R to be different if n is 2, and

b) a dithiocarbamate (II) selected from the group consisting of

- manganese ethylenebis(dithiocarbamate) (zinc complex) (IIa),
- manganese ethylenebis(dithiocarbamate) (IIb),
- zinc ammoniate ethylenebis(dithiocarbamate) (IIc) and
- zinc ethylenebis(dithiocarbamate) (IId), and/or

c) 1-(2-cyano-2-methoxyiminoacetyl)-3-ethylurea (III)

$$H_3CCH_2\text{-NHCONH-CO-C(CN)=NOCH}_3 \qquad III$$

in a synergistically active amount.

**2.** A fungicidal mixture as claimed in claim 1, comprising manganese ethylenebis(dithiocarbamate) (zinc complex) (IIa).

**3.** A fungicidal mixture as claimed in claim 1, comprising manganese ethylenebis(dithiocarbamate) (IIb).

**4.** A fungicidal mixture as claimed in claim 1, comprising zinc ammoniate ethylenebis(dithiocarbamate) (IIC).

**5.** A fungicidal mixture as claimed in claim 1, comprising zinc ethylenebis(dithiocarbamate) (IId).

**6.** A fungicidal mixture as claimed in claim 1, wherein the weight ratio of the compound II to the compound I is 200: 1 to 0.1:1.

**7.** A method of controlling harmful fungi, which comprises treating the harmful fungi, their habitat, or the plants, seeds, soils, areas, materials or spaces to be kept free from them with a compound of the formula I as set forth in claim 1 and the compound of the formula II and/or III as set forth in claim 1.

## Revendications

**1.** Mélange fongicide contenant

a) un carbamate de formule I

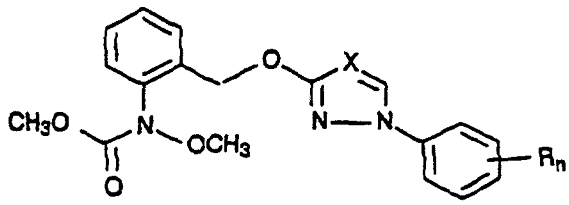

I

dans laquelle X représente CH ou N, n est égal à 0, 1 ou 2 et R représente un halogène, un groupe alkyle en C1-C4 ou halogénoalkyle en C1-C4, les substituants R pouvant être différents lorsque n est égal à 2, et

b) un dithiocarbamate (II) choisi dans le groupe consistant en

- l'éthylènebis(dithiocarbamate) de manganèse (complexe de zinc), (IIa),
- l'éthylènebis(dithiocarbamate) de manganèse (IIb),
- l'éthylènebis(dithiocarbamate) ammoniacal de zinc (Iic) et
- l'éthylènebis(dithiocarbamate) de zinc (Iid), et/ou

c) la 1-(2-cyano-2-méthoxyiminoacétyl)-3-éthylurée (III)

$$H_3CCH_2\text{-NHCONH-CO-C(CN)=NOCH}_3 \qquad III$$

en quantité synergétique efficace.

**2.** Mélange fongicide selon la revendication 1, contenant de l'éthylènebis-(dithiocarbamate) de manganèse (complexe de zinc) (IIa).

**3.** Mélange fongicide selon la revendication 1, contenant de l'éthylènebis(dithiocarbamate) de manganèse (IIb).

**4.** Mélange fongicide selon la revendication 1, contenant de l'éthylènebis-(dithiocarbamate) ammoniacal de zinc (IIc).

**5.** Mélange fongicide selon la revendication 1, contenant de l'éthylènebis (dithiocarbamate) de zinc (Iid).

**6.** Mélange fongicide selon la revendication 1, caractérisé par le fait que les proportions relatives en poids entre le composé II et le composé I vont de 200 : 1 à 0,1 : 1.

**7.** Procédé pour combattre les mycètes nuisibles, caractérisé par le fait que l'on traite les mycètes nuisibles, leur habitat ou les végétaux, semences, aires, sols, matériaux ou locaux qu'on veut débarrasser des mycètes par un composé de formule I selon la revendication 1 et le composé de formule II et/ou III selon la revendication 1.